# FASCICULE DE BREVET EUROPEEN

(11) **EP 1 478 195 B1**
(45) Date de publication et mention de la délivrance du brevet: **30.07.2008**
(21) Numéro de dépôt: 04291177.6
(22) Date de dépôt: 06.05.2004
(51) Int. Cl.: H04Q 7/30

(54) **Gestion de ressources d'un réseau de communications de type point à multipoint ou multipoint à Multipoint, par deux niveaux d'allocation**
Betriebsmittelverwaltung in einem Punkt zu Mehrpunkt oder Mehrpunkt zu Mehrpunkt Kommunikationsnetzwerk, mit zwei Zuteilungsebenen
Resources management in a point-multipoint or multipoint-multipoint communication network with two levels of allocation.

(30) Priorité: 13.05.2003 FR 0305722
(43) Date de publication de la demande: 17.11.2004
(73) Titulaire: Alcatel Lucent, 75008 Paris (FR)
(72) Inventeur: Farineau, Jean, 92300 Levallois Perret (FR); Chevallier, Emmanuelle, 78360 Orgeval (FR); Lignon, Jean-No l, 31270 Frouzins (FR); Denis, Xavier, 31770 Colomiers (FR)
(74) Mandataire: Hedarchet, Stéphane

(56) Documents cités:
- EP-A- 0 719 062
- US-A- 5 608 727
- US-A1- 2002 133 589
- US-B1- 6 212 389
- US-B1- 6 381 250

## Description

L'invention concerne le domaine des réseaux de communications de type point à multipoint ou multipoint à multipoint, dans lesquels sont définies des liaisons radio partageant des ressources, et plus particulièrement la gestion de l'allocation des ressources des liaisons radio au sein de tels réseaux.

On entend ici par « réseaux de communications de type point à multipoint ou multipoint à multipoint » aussi bien les réseaux de communications par satellite que les réseaux de communications terrestres radio, avec ou sans extension satellitaire (ou déport(s) par satellite) sur une partie de leurs liaisons.

De tels réseaux de communications comportent généralement plusieurs stations de trafic, gérant chacune localement les communications des abonnés qui se trouvent placés dans leur zone de couverture radio et couplées chacune par une liaison radio, par exemple via un satellite relais, à un centre de gestion de trafic, lui-même couplé à un coeur de réseau (ou « Core Network »).

Par exemple, dans le cas d'un réseau de téléphonie cellulaire de type GSM, à extension satellitaire, chaque station de trafic comporte une station de base appelée BTS (pour « Base Transceiver Station ») gérant une cellule radio dans laquelle des terminaux d'utilisateurs peuvent établir des communications mobiles, et le centre de gestion de trafic comprend un contrôleur de station de base (ou BSC pour « Base Station Controller ») chargé principalement de gérer les ressources des liaisons satellite des différentes stations de base qui lui sont rattachées ainsi que les fonctions d'exploitation et de maintenance desdites stations de base. Le centre de gestion et les différentes stations de trafic qui lui sont rattachées constituent alors un système de station de base (ou BSS pour « Base Station System »). Par ailleurs, le contrôleur de station de base est généralement couplé, par exemple via un centre de commutation mobile (ou MSC pour « Mobile Switching Centre »), à un réseau filaire public, tel qu'un réseau PLMN (pour « Public Land Mobile Network »).

Les communications entre abonnés rattachés à des stations de trafic distantes sont établies par le centre de gestion de trafic. Plus précisément, le centre de gestion de trafic alloue dynamiquement des ressources satellite, sous forme de fréquences de transmission (en mode de fonctionnement SCPC) ou d'intervalles de temps (ou « time slots ») d'une trame temporelle (en mode de fonctionnement TDMA (multiplexage temporel)), en fonction des besoins respectifs des différentes stations de trafic qu'il gère. En d'autres termes, le centre de gestion répartit les ressources (ou canaux de transmission) du satellite entre les différentes liaisons satellite qu'il gère.

Afin d'optimiser cette répartition on peut, par exemple, utiliser la technique appelée DAMA (pour « Demand Assignment Multiple Access »). Cette technique consiste à répartir entre les différentes liaisons satellite des canaux en fonction du débit des données qu'elles doivent transmettre, ou en d'autres termes en fonction du nombre de canaux (actifs) utilisés par chaque liaison pour transmettre les trames.

Cette technique offre des résultats intéressants, notamment lorsque le trafic ne varie pas trop rapidement au niveau des différentes stations de trafic. Le document US 2002/133589 A1 concerne un procédé d'allocation dynamique de capacité pour un réseau domestique de communication. La technique utilisée est cependant indépendante du temps de réponse négligeable pour l'utilisateur. Cette dernière technique ou celle du DAMA n'est plus optimale lorsque le trafic varie très rapidement, ce qui est fréquemment le cas aux heures de pointe. En effet, le délai entre l'occurrence d'une (ou plusieurs) variations de trafic au niveau d'une (ou plusieurs) station(s) de trafic et la mise en oeuvre d'une nouvelle répartition des ressources, destinée à faire face à cette (ces) variation(s), est typiquement de l'ordre de la seconde. Par conséquent, lorsqu'une nouvelle répartition est appliquée, il arrive fréquemment que le trafic ait de nouveau varié, dans des proportions importantes, au niveau de l'une au moins des stations de trafic, de sorte que cette nouvelle répartition s'avère inadaptée.

En outre, la variabilité du trafic dépend généralement de son type (trafic de signalisation de compression, trafic de signalisation réseau, trafic voix ou trafic de données). Or, celui-ci n'est pas pris en compte lors de la détermination de la répartition.

L'invention a donc pour but d'améliorer la situation.

Elle propose à cet effet un procédé de gestion des ressources d'un réseau de communications terrestre ou par satellite, de type point à multipoint ou multipoint à multipoint, dans lequel sont définies des liaisons radio partageant des ressources.

Ce procédé consiste à déterminer, d'une première part, pour chaque station de trafic des premières données d'information représentatives des taux d'occupation, par type de trafic, des ressources précédemment allouées à sa liaison radio, d'une deuxième part, une répartition primaire des ressources entre les différentes liaisons radio, incluant des marges d'allocation, en fonction au moins des taux d'occupation par type de trafic, et d'une troisième part, pour chaque station de trafic une répartition secondaire entre ses différents types de trafic des ressources qui ont été allouées à sa liaison par la répartition primaire, compte tenu au moins de ses taux d'occupation par type de trafic.

L'invention propose également un centre de gestion de trafic pour un réseau de communications de type point à multipoint ou multipoint à multipoint terrestre ou par satellite dans lequel sont définies des liaisons radio partageant des ressources.

Ce centre de gestion comprend notamment des moyens de gestion chargés de déterminer une répartition primaire, entre les différentes liaisons radio qu'ils gèrent, des ressources incluant des marges d'allocation. Cette détermination s'effectue au moins en fonction de premières données d'information représentatives des taux d'occupation, par type de trafic, des ressources précédemment allouées aux différentes liaisons radio, afin que chaque station de trafic puisse déterminer une répartition secondaire, entre ses différents types de trafic, des ressources qui ont été allouées à sa liaison par la répartition primaire, compte tenu au moins de ses propres taux d'occupation par type de trafic.

Le centre de gestion selon l'invention pourra comporter des caractéristiques complémentaires qui pourront être prises séparément et/ou en combinaison, et en particulier :
- des moyens de compression et de décompression couplés aux moyens de gestion et capables de compresser des trames destinées aux stations de trafic distantes via les liaisons radio et de décompresser des trames compressées provenant des stations de trafic distantes, via ces liaisons radio,
- des moyens de gestion chargés de déterminer la répartition primaire à partir des premières données d'information et de secondes données d'information représentatives des besoins d'allocation des stations de trafic,
- des moyens de compression et de décompression agencés de manière à déterminer les premières données d'information à partir des informations contenues dans les trames compressées reçues. Mais, en variante, les premières données d'information peuvent être directement contenues dans les trames compressées reçues (elles sont alors déterminées par les stations de trafic),
- des moyens de compression et de décompression chargés d'extraire des trames transmises les secondes données d'information qu'elles contiennent. Pour parvenir au centre de gestion, les secondes données peuvent être intégrées soit dans des trames dédiées, et transmises via une voie de signalisation dédiée de la liaison radio correspondante, soit dans les trames de trafic transmises, par exemple sous la forme d'informations complémentaires,
- des types de trafic choisis dans un groupe comprenant au moins le trafic de signalisation de compression, le trafic de signalisation réseau, le trafic voix et le trafic de données,
- des moyens de gestion, en charge du forward traffic, comprenant des moyens de répartition secondaire chargés de déterminer la répartition secondaire en fonction de niveaux de priorité définis entre les types de trafic. Dans ce cas, les moyens de répartition secondaire sont préférentiellement chargés, lorsqu'une saturation survient au niveau des ressources de leur liaison allouées au trafic voix, d'attribuer audit trafic voix les ressources précédemment allouées au trafic de données, les moyens de compression et décompression stockant alors dans une première mémoire, de type tampon, les données du trafic de données de cette liaison pendant la durée de la saturation et supprimant ces données stockées lorsque cette durée dépasse un seuil choisie. En outre, lorsque la saturation du trafic voix persiste, les moyens de répartition secondaire sont alors chargés d'autoriser le maintient des communications en cours, et d'interdire l'initialisation de nouvelles communications sur la liaison considérée. Si cela ne suffit toujours pas, les moyens de répartition secondaire sont alors chargés d'attribuer momentanément au trafic voix de leur liaison les ressources réservées au trafic dit « en mode silence » (ou « idle ») de cette liaison, tout en continuant d'interdire l'initialisation de nouvelles communications sur la liaison considérée,
- des moyens de gestion chargés de déterminer la répartition primaire à partir d'un modèle d'évolution de trafic de type statique,
- des moyens de gestion comprenant des moyens de répartition primaire chargés, d'une première part, de stocker les taux d'occupation par type de trafic déterminés pour chaque station de trafic, d'une deuxième part, de déterminer, de préférence par extrapolation, pour chaque station de trafic, les ressources dont elle a besoin pour chacun de ses types de trafic en fonction de ses taux d'occupation par type de trafic déterminés, d'une troisième part, de déterminer des marges d'allocation pour les ressources extrapolées associées à chaque type de trafic en fonction de données d'évolution de trafic stockées, propres à chaque station de trafic, et des taux d'occupation déterminés de l'ensemble des stations de trafic, et d'une quatrième part, d'ajouter les marges d'allocation déterminées aux ressources extrapolées, de manière à fournir la répartition primaire. Dans ce cas, les moyens de répartition primaire sont préférentiellement agencés de manière à déterminer des données d'évolution de trafic représentatives de l'écart entre les ressources extrapolées précédemment déterminées, hors marge, et les ressources effectivement utilisées, obtenues à partir des taux d'occupation qui viennent d'être déterminés. Les moyens de répartition primaire sont alors agencés de manière à générer, à partir des données d'évolution de trafic, des histogrammes représentatifs de la variation temporelle de chaque type de trafic pour chaque liaison, puis à déterminer à partir de chaque histogramme un taux de blocage pour chaque liaison, fonction de la marge d'allocation attribuée, puis à déterminer pour chaque liaison un taux de blocage pour chaque taux d'occupation déterminé pour chaque type de trafic et pour chaque valeur de marge à partir d'une valeur nulle, de manière à déterminer le nombre de canaux de marge à attribuer à chaque liaison, compte tenu de ses taux d'occupation déterminés, et enfin à effectuer un tri par taux de blocage croissant, toutes liaisons confondues, de manière à garantir le taux de blocage le plus faible pour chacune des liaisons compte tenu de la marge d'allocation totale disponible,
- des moyens de gestion chargés d'établir périodiquement la répartition primaire, et des moyens de répartition secondaire chargés d'établir périodiquement leur répartition secondaire, consécutivement à l'établissement d'une répartition primaire,
- des moyens de gestion chargés d'établir la répartition primaire pour le trafic à transmettre (forward traffic) et pour le trafic à recevoir (return traffic).

L'invention concerne également une station de trafic pour un réseau de communications terrestre ou par satellite de type point à multipoint ou multipoint à multipoint dans lequel a été définie une liaison radio entre ladite station de trafic distante et un centre de gestion de trafic, ladite station de trafic comprenant des moyens de répartition secondaire chargés de déterminer, en fonction au moins de ses taux d'occupation par type de trafic, la répartition secondaire entre ses différents types de trafic des ressources qui ont été allouées à sa liaison radio par un centre de gestion du type de celui présenté ci-avant.

La station de trafic selon l'invention pourra comporter des caractéristiques complémentaires qui pourront être prises séparément et/ou en combinaison, et en particulier :
- des moyens de compression et de décompression couplés à ses moyens de répartition secondaire et chargés de compresser des trames à destination du centre de gestion, via sa liaison radio, et de décompresser des trames compressées provenant du centre de gestion, via sa liaison radio,
- des moyens de contrôle chargés de déterminer des premières données d'information représentatives des taux d'occupation, par type de trafic, des ressources précédemment allouées à sa liaison radio par le centre de gestion, et d'ordonner la transmission des premières données d'information au centre de gestion de trafic, via sa liaison radio,
- des moyens de contrôle agencés pour déterminer des secondes données d'information, représentatives de ses besoins d'allocation de ressources, en fonction du trafic à transmettre au centre de gestion via la liaison radio, et pour ordonner leur transmission au centre de gestion de trafic via ladite liaison radio, en vue de la détermination de la répartition primaire. La station peut alors transmettre les secondes données d'information soit via une voie de signalisation dédiée de sa liaison radio, soit intégrées dans les trames transmises au centre de gestion. Par ailleurs, les moyens de contrôle peuvent être agencés de manière à déterminer des secondes données d'information sous forme d'indicateurs binaires représentatifs d'états de saturation,
- des moyens de répartition secondaire capables de déterminer la répartition secondaire en fonction de niveaux de priorité définis entre les différents types de trafic. Dans ce cas, les moyens de répartition secondaire sont préférentiellement chargés, lorsque survient une saturation des ressources allouées au trafic voix, d'attribuer à ce trafic voix les ressources précédemment allouées au trafic de données, puis d'ordonner aux moyens de compression et décompression de stocker dans une première mémoire, de type tampon, les données du trafic de données pendant la durée de la saturation, et de supprimer les données stockées lorsque cette durée dépasse un seuil choisi. En outre, lorsque la saturation du trafic voix persiste, les moyens de répartition secondaire sont chargés d'autoriser le maintient des communications en cours, et d'interdire l'initialisation de nouvelles communications sur leur liaison. De plus, si cette saturation persiste encore, les moyens de répartition secondaire sont alors agencés de manière à attribuer momentanément au trafic voix les ressources réservées au trafic dit « en mode silence » (ou « idle »), tout en continuant d'interdire l'initialisation de nouvelles communications sur leur liaison,
- des moyens de répartition secondaire chargés d'établir périodiquement leur répartition secondaire, consécutivement à l'établissement d'une répartition primaire par le centre de gestion.

L'invention trouve une application particulièrement intéressante, bien que non exclusive, dans tous les réseaux de communications de type point à multipoint ou multipoint à multipoint tels que les réseaux de communications par satellite, les réseaux de communications terrestres radio, comme par exemple les réseaux sur base E1 ouT1 et analogues, ou sur base Ethernet, IP, Frame Relay et ATM, et les réseaux de communications terrestres radio utilisant une extension satellitaire (ou des déport(s) par satellite) sur une partie de leurs liaisons, comme par exemple les réseaux cellulaires de type TDMA ou CDMA.

D'autres caractéristiques et avantages de l'invention apparaîtront à l'examen de la description détaillée ci-après, et des dessins annexés, sur lesquels :
- la figure 1 illustre de façon schématique une partie d'un réseau de communications à extension satellitaire selon l'invention,
- la figure 2 illustre de façon schématique un premier exemple de réalisation d'un centre de gestion selon l'invention,
- la figure 3 illustre de façon schématique un exemple de trame compressée de format standard fixe,
- la figure 4 illustre de façon schématique un exemple de trame compressée à format variable, utilisable dans un réseau selon l'invention,
- la figure 5 illustre de façon schématique un premier exemple de réalisation d'une station de trafic selon l'invention,
- la figure 6 est un diagramme illustrant de façon schématique un exemple d'histogramme en fonction de l'écart entre le nombre de canaux utilisés et le nombre de canaux initialement alloués,
- la figure 7 est un diagramme illustrant de façon schématique un exemple de variation du taux de blocage en fonction de la marge d'allocation,
- la figure 8 illustre de façon schématique un exemple de répartition de ressources entre six liaisons satellite,
- la figure 9 illustre de façon schématique un second exemple de réalisation d'une station de trafic selon l'invention, et
- la figure 10 illustre de façon schématique un second exemple de réalisation d'un centre de gestion selon l'invention.

Les dessins annexés pourront non seulement servir à compléter l'invention, mais aussi contribuer à sa définition, le cas échéant.

L'invention concerne un réseau de communications de type point à multipoint ou multipoint à multipoint dans lequel sont définies des liaisons radio partageant des ressources.

Dans ce qui suit, on considérera, de façon non limitative que le réseau de communications est un réseau de téléphonie cellulaire, par exemple de type GSM (ou 2G), à extension satellitaire (ou déport(s) par satellite). Mais, l'invention ne se limite pas à ce type de réseau. Comme indiqué précédemment, elle concerne tous les réseaux de communications de type point à multipoint ou multipoint à multipoint tels que les réseaux de communications par satellite, les réseaux de communications terrestres radio, comme par exemple les réseaux sur base E1 ouT1 et analogues, ou sur base Ethernet, IP, Frame Relay et ATM, et les réseaux de communications terrestres radio utilisant une extension satellitaire (ou des déport(s) par satellite) sur une partie de leurs liaisons, comme par exemple les réseaux cellulaires de type TDMA ou CDMA.

Par ailleurs, dans ce qui suit on décrira une mise en oeuvre de l'invention au niveau de l'interface BSC-BTS du réseau GSM. Mais l'invention ne se limite pas à ce seul type d'interface. Elle concerne toute autre interface du réseau et peut également s'appliquer au partage de ressources de transmission entre au moins deux types d'interface d'un même réseau.

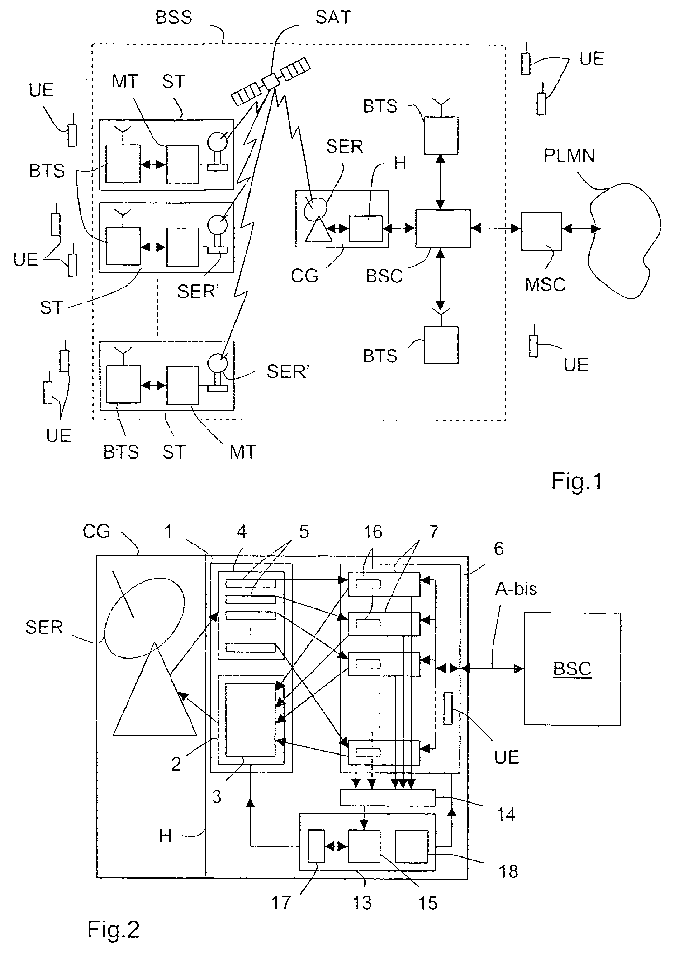

On se réfère tout d'abord à la figure 1 pour présenter l'invention dans l'application non limitative précitée.

Un réseau de communications GSM à extension satellitaire, du type de celui illustré sur la figure 1, peut, d'une façon très schématique mais néanmoins suffisante à la compréhension de l'invention, être résumé à un sous-système radio classique, appelé système de station de base BSS (pour « Base Station System ») et couplé à un coeur de réseau ou « Core Network », ici matérialisé sous la forme d'un réseau filaire public, tel qu'un réseau PLMN (pour « Public Land Mobile Network »).

Le couplage entre le système BSS et le réseau filaire PLMN est ici assuré par un centre de commutation mobile MSC (ou « Mobile Switching Centre »).

Le système BSS comporte tout d'abord au moins un centre de gestion de trafic CG, par exemple agencé sous la forme d'un « hub » H couplé à une station émettrice/réceptrice SER par laquelle s'effectuent les liaisons satellite Li avec un satellite relais de communications SAT.

Il est important de noter que le centre de gestion CG et le hub H (centre d'échange avec les stations de trafic STi distantes) peuvent être dissociés et/ou espacés l'un de l'autre.

Le système BSS comporte également au moins un contrôleur de station de base BSC (ou « Base Station Controller ») couplé, d'une part, au centre de gestion de trafic CG, et plus précisément à son hub H, et d'autre part, au centre de commutation mobile MSC. Comme indiqué précédemment, le contrôleur BSC est principalement chargé de gérer les ressources des liaisons satellite des différentes stations de base BTS qui lui sont rattachées ainsi que les fonctions d'exploitation et de maintenance desdites stations de base.

Le couplage entre le contrôleur BSC et les stations de base BTS s'effectue par une interface appelée A-bis. Cette interface est de type synchrone. Elle opère avec un tramage de type G.704 (on parle alors de trames E1 dont une portion ou la totalité comporte des données utiles).

En mode de transmission TDMA, chaque trame se décompose en un nombre fixe d'intervalles temporels (ou time slots) comportant chacun un octet. Ce nombre est égal à 32 dans le cas de trames de type E1, conformément aux recommandations G.703/G.704 de l'ITU-T. Généralement, la fréquence trame est de 8 kHz, ce qui permet de véhiculer 31 canaux à 64 kbps, à raison d'un canal par intervalle temporel.

Sur l'interface A-bis, chaque octet se décompose soit en quatre doublets (échantillon de deux bits appelé « nibble ») portant chacun un canal à 16 kbps, soit en huit canaux vocaux comprimés en débit moitié (chaque bit correspondant alors à un canal vocal). Un octet peut en variante ne pas être décomposé. C'est notamment le cas de la transmission des données dans les réseaux GSM/GPRS (les canaux de données sont alors à 64 kbits/s), ou de la transmission de la signalisation.

Par ailleurs, le couplage entre le contrôleur BSC et le centre de commutation mobile MSC s'effectue éventuellement par l'intermédiaire d'un transcodeur/unité d'adaptation de taux (ou TRAU pour « Transcoder/Rate Adaptor Unit »). Ce dernier est destiné à convertir les données de voix comprimées à 13 kbps en données de voix numérisées à 64 kbps afin de rendre les canaux de voix compatibles avec le centre de commutation mobile MSC. Dans ce cas, le couplage entre le centre de commutation mobile MSC et le TRAU s'effectue par une interface appelée A, tandis que le couplage entre contrôleur BSC et le TRAU s'effectue par une interface appelée A-ter.

Afin d'assurer une couverture de territoire importante, le centre de commutation mobile MSC peut être couplé à plusieurs contrôleurs BSC via plusieurs interfaces A-ter.

Le centre de commutation mobile MSC est chargé de réaliser toutes les opérations nécessaires à la gestion des communications avec les terminaux d'utilisateurs UE.

Enfin, le système BSS comporte plusieurs stations de trafic ST associées chacune à au moins une zone de couverture dans laquelle des terminaux d'utilisateurs UE peuvent établir des communications. Chaque station de trafic ST est agencée sous la forme d'une station de base BTS (ou « Base Transceiver Station »), définissant sa ou ses zones de couverture et couplée à un module d'allocation de ressources MT, elle-même couplée à une station émettrice/réceptrice SER' par laquelle s'effectue la liaison satellite Li avec le satellite SAT.

Comme illustré sur la figure 1, le contrôleur BSC peut être également couplé directement, via des interfaces A-bis à des stations de base BTS, indépendantes des liaisons satellite.

Un centre de gestion de trafic CG, selon l'invention, est notamment destiné à gérer les ressources du satellite SAT et plus précisément à répartir ses ressources entre les différentes liaisons établies entre la station émettrice/réceptrice SER et les stations de trafic distantes ST.

Dans l'exemple illustré sur la figure 2, on considère un ensemble de liaisons satellite Li, reliant le hub H à un ensemble de sites (ou stations de trafic) STi distants, à raison d'une liaison satellite Li par site distant STi. Ces liaisons Li utilisent une ressource partagée (porteuse Lf) en mode Forward (c'est-à-dire du hub H vers les stations distantes STi) et un ensemble de porteuses partagées (Lr) par l'ensemble des liaisons en mode Return (c'est-à-dire des stations distantes STi vers le hub H).

Le hub H (ici du centre de gestion de trafic CG) comporte tout d'abord un modem 1 constitué d'un premier ensemble 2 de modulateur(s) 3 et d'un second ensemble 4 de démodulateurs 5.

Plus précisément, dans l'exemple de réalisation, le premier ensemble 2 comporte un modulateur 3 produisant une porteuse modulée exploitée par l'ensemble des sites distants STi. Ce modulateur 3 est destiné à moduler les trames provenant du contrôleur BSC, et destinées à l'ensemble des stations de trafic distantes STi via la fréquence porteuse Lf.

Le second ensemble 4 comporte autant de démodulateurs 5 que de porteuses Lr. Chaque démodulateur 5 est destiné à démoduler la porteuse provenant de stations de trafic distantes STi, et ainsi restituer les trames destinées au contrôleur BSC. Par exemple, le modem 1 est destiné à assurer l'émission/réception en « full-duplex » d'intervalles de temps (ou « time slots »), qui correspond au mode de transmission TDMA.

Dans le mode de réalisation décrit, les trames échangées sont compressées de manière à limiter le trafic sur les liaisons satellites Li.

Par conséquent, le hub H comporte des moyens de compression et de décompression (ou expansion) 6 couplés au modem 1 et comportant, dans l'exemple illustré, autant de compresseurs/décompresseurs (ou compresseurs/expanseurs) 7 que de liaisons satellite Li. Plus précisément, chaque compresseur/décompresseur 7 est alimenté en trames démodulées et compressées par l'un des démodulateurs 5 et alimente en trames compressées à moduler l'un des modulateurs 3.

La partie compression du compresseur/décompresseur 7 assure la compression des trames à transmettre et l'adaptation du format des blocs de données à l'interface avec le modem 1, laquelle est de type Ethernet, IP ou ATM. La partie décompression du compresseur/décompresseur 7 assure l'adaptation à l'interface avec le modem 1, laquelle est généralement du même type que celle de la partie compression, et la restitution, par décompression, des trames initiales (c'est-à-dire telles qu'elles étaient avant d'être compressées dans la station de trafic ST).

La compression peut s'effectuer de différentes façons. Cependant, il est avantageux d'utiliser la méthode décrite dans le document brevet WO 03/019834 de la Demanderesse, dont l'ensemble du contenu technique est ici intégré par référence. Cette compression n'est pas ici décrite dans la mesure où elle ne fait pas l'objet de l'invention. On rappellera simplement que cette compression repose sur l'analyse de l'évolution temporelle des contenus respectifs de chaque canal de données. Un canal est dit passif lorsqu'il est inchangé par rapport à l'un au moins des cycles d'allocation précédents, tandis qu'un canal est dit actif lorsque l'un au moins des bits qu'il véhicule a changé par rapport à l'un au moins des cycles d'allocation précédents. Seuls les canaux actifs sont intégralement transmis, les canaux inactifs étant compressés, c'est-à-dire supprimés.

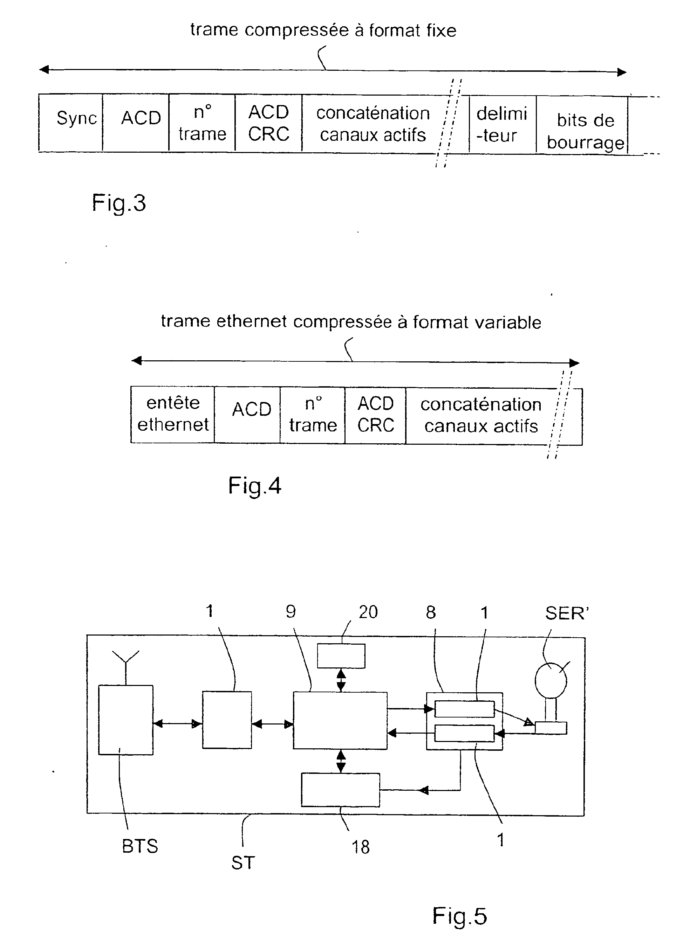

On a représenté sur la figure 3, la structure typique d'une trame compressée standard de l'art antérieur, à transmettre via le satellite SAT sur l'interface air.

Le premier champ « SYNC » est réservé à la synchronisation de la transmission des trames, notamment au niveau de l'équipement destinataire. Le deuxième champ « ACD » (pour « Active Channel Descriptor ») est un descripteur de canal actif qui permet d'identifier les positions des canaux actifs au sein de la trame à reconstituer, mais surtout de garantir la synchronisation de la décompression des données et la prise en compte de la trame en cas de perte(s) de blocs de données dans la chaîne de transmission. Le troisième champ « n°trame » permet de préciser la position d'une trame dans un flux. Le quatrième champ « ACD CRC » est dédié à la sécurisation d'entête. Le cinquième champ « canaux actifs concaténés » comporte tous les canaux actifs de la trame, sous une forme concaténée. Le sixième champ délimiteur permet de différencier les données du cinquième champ de celles d'un septième champ. Et enfin, le septième champ « bits de bourrage » (ou « bits de padding ») permet de maintenir la trame à une taille constante (fixe).

L'un des objectifs de l'invention est de permettre l'utilisation de trames de dimension (ou format) variable et non plus de trames de dimension fixe qui comportent des bits de bourrage qui ne servent à rien.

Un exemple d'une trame à format variable, utilisable dans un réseau selon l'invention, est illustré sur la figure 4.

Cette trame comprend un premier champ d'entête, par exemple Ethernet, en remplacement du champ SYNC. Puis, les deuxième (ACD), troisième (n°trame), quatrième (ACD CRC) et un cinquième ((concaténation canaux actifs) champs sont sensiblement identiques aux champs de la trame standard à dimension fixe (illustrée sur la figure 3). Le nombre de canaux actifs variant en fonction du débit de la liaison, la dimension du cinquième et dernier champ (de concaténation) est donc variable, tout comme celle de la trame qui le contient.

Afin, d'une part, de pouvoir transmettre au centre de gestion CG des trames compressées et modulées, et d'autre part, de pouvoir démoduler et décompresser les trames transmises par le centre de gestion CG, chaque station de trafic STi comprend, comme illustré sur la figure 5, un modem 8, du type de celui que comprend ledit centre de gestion CG, et un compresseur/décompresseur 9, du type de ceux que comprend ledit centre de gestion CG. Le modem 8 comporte plus précisément une partie 10 dédiée à la modulation et une partie 11 dédiée à la démodulation. Par ailleurs, le modem 8 est couplé à la station émettrice/réceptrice SER', tandis que le compresseur/décompresseur 9 est couplé, via un module de contrôle 12 (sur lequel on reviendra plus loin) et une interface G.703, à la station de base BTS.

En complément du modem 1 et des moyens de compression et décompression 6, qui gèrent les trames à format variable présentées ci-avant, le hub H comprend un module de gestion 13 couplé, d'une part, au modem 1, et d'autre part, aux moyens de compression et décompression 6 et plus précisément à ses différents compresseurs/décompresseurs 7, de préférence par l'intermédiaire d'un module de médiation et de concentration 14.

Ce module de gestion 13 est chargé de déterminer, de préférence de façon périodique (ou cyclique), une répartition primaire, entre les différentes liaisons satellite Li que gère son centre de gestion CG, des ressources satellitaires incluant des marges d'allocation. Cette détermination s'effectue au moins en fonction de premières données d'information représentatives des taux d'occupation, par type de trafic, des ressources précédemment allouées aux différentes liaisons satellite, afin que chaque station de trafic STi puisse déterminer une répartition secondaire, entre ses différents types de trafic, des ressources qui ont été allouées à sa liaison par la répartition primaire, compte tenu au moins de ses propres taux d'occupation par type de trafic.

Préférentiellement, le module de gestion 13 fonctionne selon une technique d'allocation dérivée de la technique dite DAMA (pour « Demand Assignment Multiple Access »). Comme indiqué précédemment, la technique DAMA classique consiste à allouer à une liaison satellite Li un nombre de canaux fonction du débit des données à transmettre, ou en d'autres termes fonction du nombre de canaux (actifs) utilisés pour transmettre les trames, indépendamment du type de trafic que véhiculent lesdits canaux. Ce nombre de canaux alloués inclut une marge d'allocation qui est généralement répartie de façon équitable entre les différentes liaisons. Une présentation détaillée de la technique d'allocation dynamique DAMA peut être trouvée dans l'ouvrage « Satellite Communication Systems » de G. Maral et M. Bousquet, Wiley éditeur.

Dans la technique DAMA dérivée, mise en oeuvre par l'invention, le module de gestion 13 comporte un module d'allocation de ressources 15 chargé de déterminer la répartition primaire des ressources en fonction des taux d'occupation par type de trafic. Ces taux d'occupation lui sont délivrés par les compresseurs/décompresseurs 7, et plus précisément par un module d'évaluation de charge 16 qu'ils comprennent chacun, via le module de médiation et de concentration 14.

Plus précisément, chaque module d'évaluation de charge 16 agit en sortie de la fonction de décompression sur les trames décompressées. Il détermine dans chaque trame décompressée des premières données d'information représentatives des taux d'occupation par type de trafic.

Parmi les types de trafic, on peut notamment citer le trafic de signalisation de compression, le trafic de signalisation réseau (ici GSM), le trafic voix et le trafic de données.

Les premières données d'information sont soit contenues dans les trames reçues (elles ont par conséquent été précédemment déterminées par les stations de trafic STi), soit déterminées à partir du contenu des trames reçues.

La détermination à partir des informations contenues dans les trames décompressées peut s'effectuer à partir d'une comparaison entre le nombre de canaux utilisés pour un type de trafic donné et le nombre de canaux précédemment alloués par le module de gestion 13. Bien entendu, dans ce cas, le module d'allocation de ressources 15 fournit au module d'évaluation de charge 16 chaque répartition primaire qu'il a déterminée, afin de donner à chaque module d'évaluation de charge 16 la possibilité de déduire le taux de charge de la liaison vis à vis de la capacité effectivement allouée à cette même liaison.

Les premières données d'information provenant des stations de trafic STi sont préférentiellement déterminées directement par leur module de contrôle 12 à partir des flux de tout type qu'ils reçoivent de leur station de base BTS et qui doivent être transmis au centre de gestion CG. Cette solution est préférée, car elle est plus précise que la précédente.

Dans un cas comme dans l'autre, le module d'évaluation de charge 16 transmet au module d'allocation de ressources 15, lors de chaque cycle (ou période) d'allocation, les taux d'occupation par type de trafic, pour chaque liaison satellite Li. Il est rappelé ici que la durée d'un cycle d'allocation est de l'ordre de 500 ms à quelques secondes pour un système opérant en DAMA.

Pour déterminer la répartition primaire, le module d'allocation de ressources 15 stocke préférentiellement tous les taux d'occupation par type de trafic et par liaison Li, qu'il reçoit des modules de détection 16. Puis, il détermine, de préférence par extrapolation, pour chaque station de trafic STi (ou liaison Li), les ressources, hors marge d'allocation, dont elle a besoin pour chacun de ses types de trafic compte tenu des taux d'occupation par type de trafic (venant d'être déterminés).

Cette extrapolation peut également prendre en compte les besoins de capacité extrapolés des stations de trafic STi. En effet, en raison de l'écart temporel entre la mesure de capacité utilisée et l'allocation de capacité, le flux appliqué en entrée de la station de trafic STi par la station de base BTS associée peut nécessiter un nombre de canaux supérieur au nombre maximal autorisé par le centre de gestion CG. Le processus d'extrapolation introduit une marge destinée à réduire le risque de congestion lié à cet écart temporel entre la mesure et l'allocation effective de capacité.

Or, cette situation de congestion (ou saturation) ne peut pas être signalée par les seuls taux d'occupation. Par conséquent, les stations de trafic STi sont préférentiellement agencées de manière à déterminer des secondes données d'informations représentatives de leurs besoins d'allocation.

Ces secondes données d'informations sont préférentiellement déterminées par le module de contrôle 12 qui reçoit de la station de base BTS les flux de tout type à transmettre au centre de gestion CG.

Les secondes données d'informations sont soit transmises par les stations de trafic STi à l'intérieur de trames de signalisation dédiées, qui peuvent emprunter une voie de signalisation dédiée de leur liaison satellite Li, soit transmises dans les trames de trafic compressées et modulées, sous la forme d'informations complémentaires. Afin de limiter le sur-débit entraîné par la présence des secondes données d'information, celles-ci peuvent être agencées sous la forme d'indicateurs binaires ou d'informations sur quelques bits signalant un état de congestion (ou saturation).

Les modules de détection 16, des compresseurs/décompresseurs 7 du centre de gestion CG, sont alors agencés pour extraire les secondes données d'informations des trames de trafic ou trames dédiées, puis les transmettre au module d'allocation de ressources 15, lors de chaque cycle (ou période) d'allocation, en correspondance de la liaison satellite Li dont elles sont issues.

Lors de chaque cycle d'allocation, le module d'allocation de ressources 15 reçoit donc des premières données d'information (taux d'occupation constaté par liaison), et éventuellement des secondes données d'information (besoins par type de trafic), et détermine à partir de ces données reçues et de données d'évolution de trafic, caractérisant chacune des liaisons Li (ou chaque station de trafic STi), des marges d'allocation.

Les données d'évolution de trafic sont préférentiellement stockées dans une première mémoire 17 du module de gestion 13.

Ces données d'évolution de trafic peuvent être représentatives d'un modèle statique (ou analytique) d'évolution de trafic, qui peut être éventuellement renouvelé régulièrement. Mais, il est préférable que ces données d'évolution de trafic soient représentatives d'un modèle dynamique d'évolution de trafic.

Dans ce dernier cas, le module d'allocation de ressources 15 détermine préférentiellement des données d'évolution de trafic représentatives de l'écart entre les ressources extrapolées précédemment déterminées, hors marge, et les ressources effectivement utilisées, obtenues à partir des taux d'occupation qui viennent d'être déterminés.

Le module d'allocation de ressources 15 est alors agencé de manière à générer, à partir des données d'évolution de trafic, des histogrammes représentatifs des écarts comptabilisés entre les ressources prévues par extrapolation, hors marge, et les ressources effectivement utilisées, obtenues à partir des taux de variation temporelle de chaque type de trafic pour chaque liaison. Ces histogrammes sont mis à jour à chaque cycle afin de tenir compte au mieux de l'évolution temporelle de chaque type de trafic au niveau de chaque liaison.

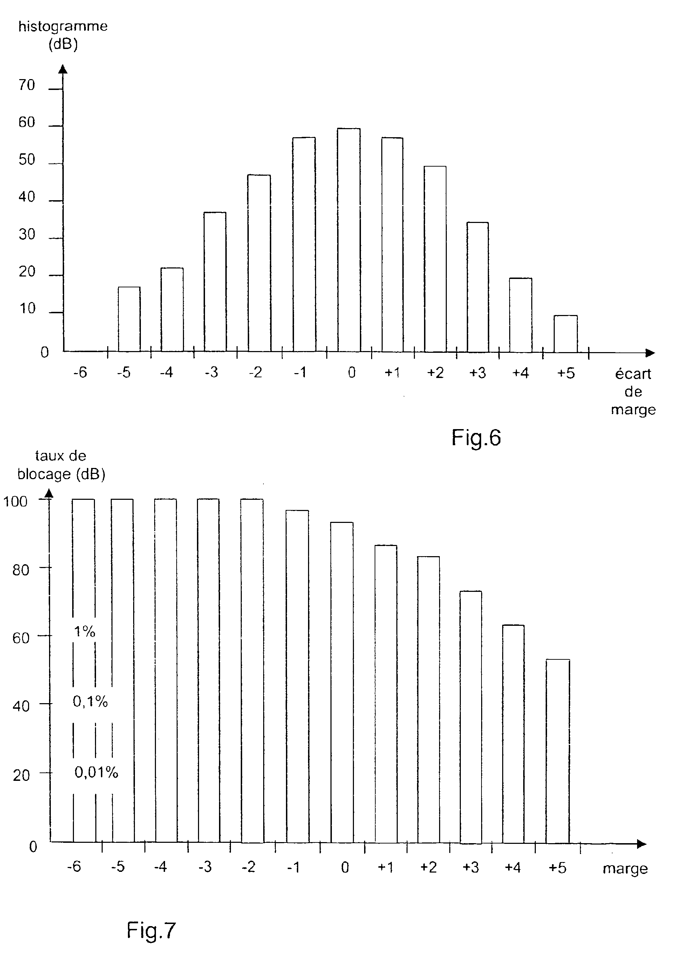

Un exemple d'histogramme généré par le module d'allocation de ressources 15 est illustré sur la figure 6. Il s'agit d'un histogramme normalisé pour un type de trafic et pour une liaison satellite Li, exprimé en dB en fonction de la différence entre le nombre de canaux utilisés et le nombre de canaux initialement alloués, un canal représentant une capacité élémentaire de 8 kbps dans l'exemple de mise en oeuvre décrit.

On peut ainsi définir les caractéristiques de chaque trafic en termes de taux de charge, de cadence d'alternance entre communicants, de temps de parole entre communicants, et d'une manière générale de tout paramètre de nature à influer sur l'attribution d'une marge d'allocation.

Sur la base de chaque histogramme, le module d'allocation de ressources 15 détermine le taux de blocage par liaison en fonction de la marge d'allocation allouée. Un exemple d'évolution du taux de blocage est illustré sur la figure 7. On peut constater qu'une marge de quatre canaux garantit un taux de blocage d'environ 2%.

Puis, le module d'allocation de ressources 15 tabule, pour chaque liaison satellite Li, le taux de blocage pour chaque taux d'occupation déterminé (ou valeur de charge courante de trafic), pour chaque type de trafic et pour chaque valeur de marge à partir d'une valeur nulle. Il utilise ensuite ces tables afin de déterminer le nombre de canaux de marge à attribuer à chaque liaison satellite Li, par type de trafic, en fonction de sa charge courante (taux d'occupation déterminés). Pour ce faire, le module d'allocation de ressources 15 prend, à chaque cycle d'allocation, pour chaque liaison satellite Li et pour chaque type de trafic, la valeur de la capacité requise (en termes de canaux). Puis, il effectue le tri par taux de blocage croissant, toutes liaisons confondues. L'allocation des marges de chaque liaison s'effectue alors en visant le taux de blocage le plus faible possible, en partant de la liaison présentant le taux de blocage le plus faible, compte tenu de la marge d'allocation totale disponible. La répartition des marges s'effectue par type de trafic, la marge totale allouée à une liaison satellite Li étant ensuite égale à la somme des marges allouées à chacun de ses types de trafic.

Par exemple, on peut obtenir le tableau suivant pour un type de trafic :

| n° liaison | Taux de blocage | Marge allouée | Cumul de marge |
|---|---|---|---|
| 5 | 0,00010% | 5 | 25 |
| 6 | 0,00015% | 4 | 24 |
| 3 | 0,00027% | 4 | 23 |
| 2 | 0,00048% | 3 | 22 |
| 4 | 0,00079% | 5 | 21 |
| 1 | 0,00095% | 4 | 20 |
| 5 | 0,0010% | 4 | 19 |
| 6 | 0,0015% | 3 | 18 |
| 3 | 0,0027% | 3 | 17 |
| 2 | 0,0048% | 2 | 16 |
| 4 | 0,0079% | 4 | 15 |
| 1 | 0,0095% | 3 | 14 |
| 5 | 0,010% | 3 | 13 |
| 6 | 0,015% | 2 | 12 |
| 3 | 0,027% | 2 | 11 |
| 2 | 0,048% | 1 | 10 |

...
...

Dans cet exemple, si la marge totale qui peut être allouée pour le type de trafic considéré est égale à 27 canaux, alors le module d'allocation de ressources 15 alloue 3 canaux de marge à la liaison n°3, 2 canaux de marge à la liaison n°2, 4 canaux de marge à la liaison n°4, 3 canaux de marge à la liaison n°1, 3 canaux de marge à la liaison n°5, et 2 canaux de marge à la liaison n°6. Cela garantit un taux de blocage théorique meilleur que 0,015% pour chacune des six liaisons satellite Li, sachant que, dans cette répartition, la liaison la moins favorisée statistiquement parlant est la liaison n°6, qui ne bénéficie que d'un taux de blocage évalué a priori de 0,015%. A l'inverse, la liaison la plus favorisée a priori est ici la liaison n°3, avec un taux de blocage évalué de 0,0027%.

Ce principe d'allocation de marge garantit une répartition optimisée de la marge de l'ensemble des liaisons, en prenant en compte les statistiques de marge et leurs points de fonctionnement courants.

La répartition des différentes marges constitue un point de fonctionnement qui est actualisé à chaque cycle compte tenu des premières (et secondes) données d'information reçues. Il est par ailleurs possible de traiter en priorité certains trafics prioritaires, quand cela s'avère indispensable.

L'exploitation de données statistiques permet ainsi d'optimiser la répartition de la marge totale. Mais, cela a également pour conséquence de réduire la marge totale nécessaire, et par conséquent de diminuer les capacités du réseau et ses coûts d'exploitation (OPEX).

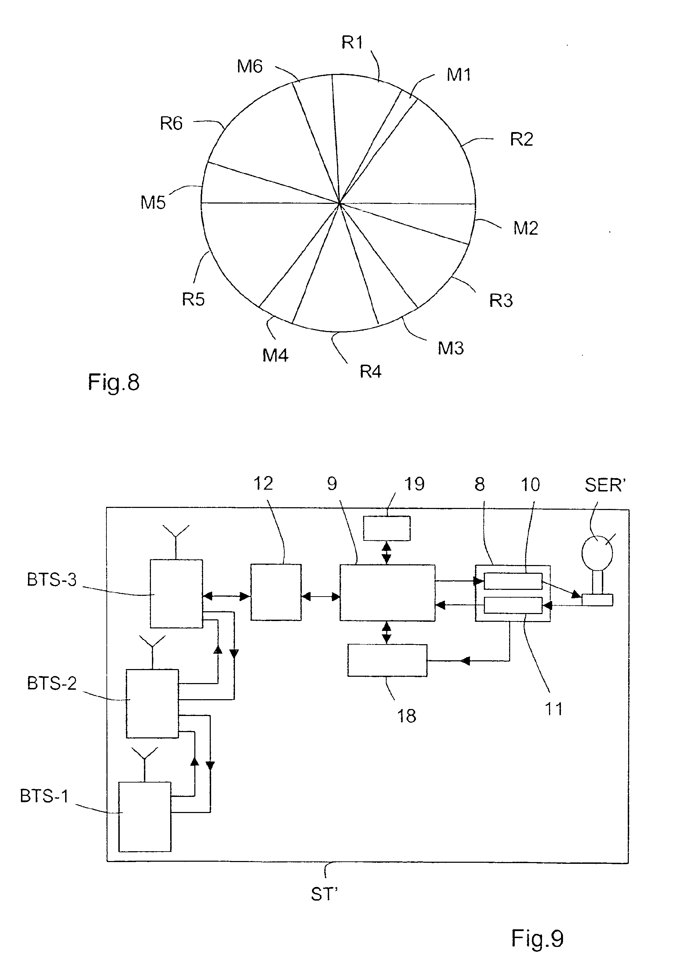

La marge totale Mi attribuée à chaque liaison satellite Li est ensuite ajoutée aux ressources Ri qui ont été précédemment extrapolées pour elle. Cela fournit la répartition primaire du cycle d'allocation. Un exemple de répartition primaire de ressources entre six liaisons satellite Li est illustré schématiquement sur la figure 8.

Les ressources totales (Ri + Li) allouées à chaque station de trafic STi sont transmises au modem 1 qui les intègre dans une trame de signalisation dédiée qu'il transmet sur la liaison satellite Li correspondante.

A réception de cette trame de signalisation dédiée, la station de trafic STi la communique à un module de répartition 18 chargé de déterminer la répartition secondaire des ressources qui lui ont été allouées en fonction de niveaux de priorité définis entre les différents types de trafic.

Préférentiellement, le module de répartition18 est configuré de manière à attribuer le niveau de priorité le plus élevé au trafic de signalisation de compression, puis le niveau inférieur au trafic de signalisation réseau (GSM), puis le niveau inférieur au trafic voix, et enfin le niveau le moins élevé au trafic de données.

La signalisation est ainsi transmise en priorité. Il est important de noter que les ressources allouées à une liaison satellite Li sont déterminées de manière à ce qu'il ne s'y produise jamais une saturation des seules données de signalisation.

Le trafic voix est prioritaire sur le trafic de données car sa variabilité temporelle est bien inférieure à celle du trafic de données. De ce fait, il ne requiert pas des marges importantes.

En dehors des situations de saturation, qui surviennent principalement pendant les heures de pointe, la répartition secondaire est effectuée de façon sensiblement équitable par le module de répartition 18. En revanche, lorsqu'une saturation survient à l'entrée du compresseur/décompresseur 9 d'une station de trafic STi, le module de répartition 18 en est immédiatement averti. Il détermine alors la répartition secondaire en fonction des besoins.

Par exemple, si le trafic de signalisation présente ponctuellement un pic à acheminer, la capacité est automatiquement réduite pour les autres types de flux (ou trafic), dans les limites de la capacité globale allouée à la liaison concernée.

En revanche, lorsque survient une saturation des communications voix, ce qui est fréquent aux heures de pointe, le module de répartition 18 attribue au trafic voix la plus grande partie des ressources, et notamment celles précédemment allouées au trafic de données. Les données du trafic de données, qui parviennent à la station de trafic STi concernée, sont alors préférentiellement stockées dans une mémoire 19, de type tampon, par le compresseur/décompresseur 9 (dans la limite d'une capacité de stockage fixée), afin de pouvoir être transmises ultérieurement (dès que la saturation prend fin). Préférentiellement, ces données sont stockées dans la mémoire tampon 19 pendant une durée qui ne peut dépasser un seuil choisi. En cas de dépassement de cette durée seuil, les données sont supprimées. En outre, si la saturation du trafic voix persiste, le module de répartition 18 est alors chargé d'autoriser le maintient des communications (voix) en cours et d'interdire l'initialisation de nouvelles communications (voix et données) sur sa liaison satellite Li. Si cela ne suffit toujours pas et si la station de trafic STi fonctionne en mode de transmission DTX, le module de répartition 18 est alors chargé d'attribuer momentanément au trafic voix les ressources qui étaient jusqu'alors réservées au trafic dit « en mode silence ». Bien entendu, dans cette situation, il continue d'interdire l'initialisation de nouvelles communications (voix et données) sur sa liaison satellite Li. Par ailleurs, dès que la saturation prend fin, les ressources initialement réservées au trafic silence lui sont restituées.

Les instructions définissant la répartition secondaire sont transmises par le module de répartition 18 au compresseur 9, pour qu'il ajuste son débit de sortie à la capacité allouée à la liaison considérée. Dans un mode particulier d'application de l'invention, le compresseur délivre ainsi des trames du type de celle illustrée sur la figure 4, où la taille de la trame dépend du débit fixé pour la sortie, la période entre deux trames restant fixe quel que soit le débit. Plus précisément, les ressources qui sont allouées à la liaison satellite Li, lors de la répartition primaire du cycle d'allocation précédent, définissent un nombre maximal de canaux (ou time slots) utilisables. Par conséquent, la dimension du cinquième champ (de concaténation) des trames compressées, que transmet la station de trafic STi à destination de son centre de gestion CG, est bornée par le nombre maximal de canaux, et le contenu des canaux est fonction de la répartition secondaire définie par le module de répartition 18.

Par ailleurs, il a été décrit ci-avant le détail des répartitions primaire et secondaire relatives au trafic (« return trafic ») devant être transmis au centre de gestion CG par les stations de trafic STi distantes. Mais, l'invention concerne également le trafic (« forward traffic ») qui doit être transmis par le centre de gestion CG aux différentes stations de trafic STi. Ce forward traffic provient du réseau GSM via le contrôleur BSC.

A cet effet, le hub H est agencé de manière à assurer sa propre répartition secondaire. Plus précisément, son module de gestion 13 comprend un module de répartition 18 du type de celui qui est implanté dans la station de trafic STi. Par ailleurs, les moyens de compression et décompression 6 comportent préférentiellement une mémoire 20, de type tampon, destinée à stocker provisoirement les données du trafic de données en cas de saturation (ou congestion), sur ordre du module de répartition 18.

Les moyens de compression/décompression 6 et le module de gestion 13 constituent préférentiellement un compresseur assurant la fonction de gestion DAMA.

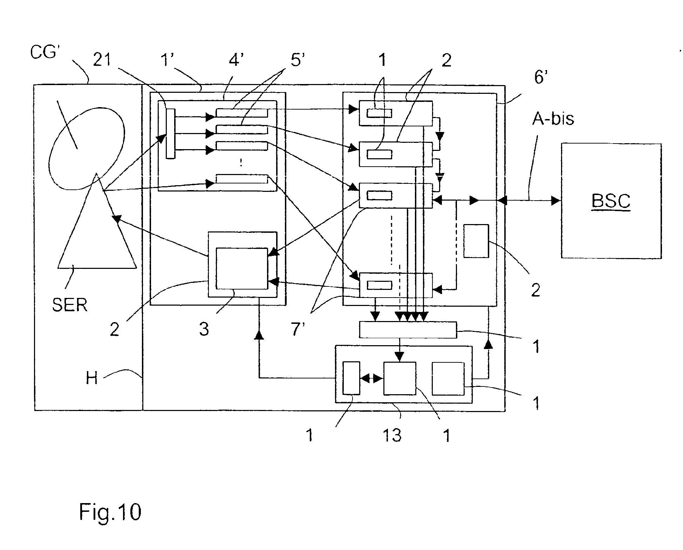

On a représenté sur les figures 9 et 10 une variante de centre de gestion CG' destinée à coopérer avec une variante de station de trafic ST' et au moins deux stations de trafic ST du type de celle présentée ci-avant en référence à la figure 5.

Dans cette variante de réalisation, la station de trafic ST', illustrée sur la figure 9, définit un premier site (S1) et comporte trois stations de base BTS-1 à BTS-3 couplées deux à deux. Les deux autres stations de trafic ST ne comportent chacune qu'une station de base BTS et définissent des deuxième (S2) et troisième (S3) sites. Ces trois sites se partagent les 31 intervalles temporels (time slots) d'une trame E1. Par exemple, le premier site S1 utilise les intervalles temporels n°1 à 15, le deuxième site S2 utilise les intervalles temporels n°16 à 24, et le troisième site S3 utilise les intervalles temporels n°25 à 31. Dans ce cas, la première station de base BTS-1 fournit le trafic occupant les intervalles temporels n°1 à 5, la deuxième station de base BTS-2 fournit le trafic occupant les intervalles temporels n°6 à 10, et la troisième station de base BTS-3 fournit le trafic occupant les intervalles temporels n°11 à 15. Par conséquent le trafic issu de la première station de base BTS-1 est transmis à la deuxième station de base BTS-2 qui le concatène à son propre trafic, et transmet la concaténation à la troisième station de base BTS-3 qui concatène son trafic à celui reçu afin de transmettre la double concaténation au compresseur/décompresseur 9 (via le module de contrôle 12).

Le reste du fonctionnement de la station de trafic ST' du premier site S1 est sensiblement identique à celui des deux autres stations de trafic ST des deuxième S2 et troisième S3 sites.

Le centre de gestion CG', illustré sur la figure 10, reprend la même architecture que celle du centre de gestion CG décrit précédemment en référence à la figure 2. En fait, seuls ses modem 1' et moyens de compression et décompression 6' diffèrent de ceux (1 et 6) du centre de gestion CG, afin de pouvoir traiter les trames E1 provenant des trois stations de trafic ST' et ST des sites S1 à S3.

Ici, le premier ensemble 4' du modem 1' comprend un répartiteur 21 chargé de distribuer sur trois démodulateurs 5' les porteuses provenant des sites S1 à S3. En fait, le répartiteur 21 transmet à un premier démodulateur 5' les intervalles temporels 1 à 15 provenant du premier site S1, à un deuxième démodulateur 5' les intervalles temporels 16 à 24 provenant du deuxième site S2 et à un troisième démodulateur 5' les intervalles temporels 25 à 31 provenant du troisième site S3. Comme illustré, le premier ensemble 4' peut comporter d'autres démodulateurs chargés de démoduler les trames E1 provenant d'autres stations de trafic ST. Les sorties des deux premiers démodulateurs 5' alimentent deux simples décompresseurs 22 des moyens de compression et décompression 6', et les sorties des autres démodulateurs alimentent des compresseurs/décompresseurs 7 du type de ceux équipant le centre de gestion CG de la figure 2. La sortie du premier décompresseur 22 alimente un étage de sortie du second décompresseur 22, dont la sortie alimente avec les portions de trames décompressées provenant des démodulateurs 22 un étage de sortie du premier compresseur/décompresseur 7, dont la sortie alimente le contrôleur BSC. Les deux décompresseurs 22, tout comme les compresseurs/décompresseurs 7 sont couplés au module de gestion 13 afin de l'alimenter en premières (et secondes) données d'information, comme dans le précédent mode de réalisation illustré sur la figure 2. Par ailleurs, seuls les compresseurs/décompresseurs 7 sont raccordés aux modulateurs 3 du second ensemble 2 du modem 1'.

Le reste du fonctionnement du centre de gestion CG', et notamment de son hub H est sensiblement identique à celui du centre de gestion CG de la figure 2.

Il est important de noter qu'il n'y a pas de bijection entre le nombre de porteuses et le nombre de sites distants STi. En revanche, il y a nécessairement bijection entre un compresseur distant d'un site distant, et donc une liaison, et un compresseur du hub H. Par ailleurs, un compresseur du hub H alimente plusieurs liaisons, donc plusieurs sites distants, et donc plusieurs décompresseurs (ou expanseurs), un décompresseur par site distant, chaque décompresseur restituant la même trame que les autres décompresseurs opérant sur la même trame compressée.

Le compresseur/décompresseur du hub H ainsi que le module de contrôle 12, le module de répartition 18 et la mémoire 19 de la station de trafic STi peuvent être réalisés sous la forme de circuits électroniques, de modules logiciels (ou informatiques), ou d'une combinaison de circuits et de logiciels.

L'invention peut également se décliner sous la forme d'un procédé de gestion des ressources d'un réseau de communications de type point à multipoint ou multipoint à multipoint.

Ce procédé consiste à déterminer, d'une première part, pour chaque station de trafic des premières données d'information représentatives des taux d'occupation, par type de trafic, des ressources précédemment allouées à sa liaison radio, d'une deuxième part, une répartition primaire des ressources entre les différentes liaisons radio, incluant des marges d'allocation, en fonction au moins des taux d'occupation par type de trafic, et d'une troisième part, pour chaque station de trafic une répartition secondaire entre ses différents types de trafic des ressources qui ont été allouées à sa liaison par la répartition primaire, compte tenu au moins de ses taux d'occupation par type de trafic.

Le procédé de gestion selon l'invention pourra comporter des caractéristiques complémentaires qui pourront être prises séparément et/ou en combinaison, et en particulier :
- l'échange de trames compressées via les liaisons satellite,
- une détermination de la répartition primaire non seulement à partir des premières données d'information, mais également à partir de secondes données d'information représentatives des besoins d'allocation des stations de trafic,
- une détermination de la répartition primaire effectuée par le centre de gestion de trafic du réseau de communications. Dans ce cas, on peut déterminer les premières données d'information soit au niveau du centre de gestion de trafic, soit au niveau des différentes stations de trafic (elles sont alors communiquées au centre de gestion de trafic via les liaisons radio),
- une détermination des secondes données d'information au niveau des différentes stations de trafic en fonction du trafic qu'elles doivent transmettre sur leur liaisons satellite respectives, en vue de leur communication au centre de gestion de trafic via les liaisons radio. Dans ce cas, on peut communiquer les secondes données d'information via une voie de signalisation dédiée de la liaison radio ou bien en les intégrant dans les trames transmises. Ces secondes données peuvent être par exemple agencées sous la forme d'indicateurs binaires représentatifs d'états de saturation de liaison,
- une détermination de chaque répartition secondaire au niveau de chacune des stations de trafic,
- des types de trafic choisis dans un groupe comprenant au moins le trafic de signalisation de compression, le trafic de signalisation réseau, le trafic voix et le trafic de données,
- une répartition secondaire pouvant être déterminée en fonction de niveaux de priorité définis entre les différents types de trafic. Dans ce cas, le trafic de signalisation de compression présente préférentiellement le niveau de priorité le plus élevé, puis vient le trafic de signalisation réseau, puis le trafic voix, et enfin le trafic de données. Lorsque survient une saturation des ressources d'une liaison allouées au trafic voix malgré une répartition secondaire, on peut alors attribuer au trafic voix, sur cette liaison, les ressources précédemment allouées au trafic de données, et stocker dans une mémoire tampon les données du trafic de données non transmises pendant la durée de la saturation, sous réserve qu'elle ne dure pas plus longtemps qu'un seuil choisi. En cas de persistance de la saturation du trafic voix, on peut alors maintenir les communications en cours, et suspendre l'initialisation de nouvelles communications sur la liaison considérée. Si cela ne suffit toujours pas, on peut également attribuer momentanément au trafic voix des ressources réservées au trafic dit « en mode silence », tout en continuant à suspendre l'initialisation de nouvelles communications sur la liaison considérée,
- une détermination de la répartition primaire pouvant être effectuée à partir d'un modèle d'évolution de trafic de type statique,
- une mémorisation des taux d'occupation par type de trafic déterminés pour chaque station de trafic, suivie d'une détermination, de préférence par extrapolation, pour chaque station de trafic, des ressources dont elle a besoin pour chacun de ses types de trafic en fonction de ses taux d'occupation par type de trafic déterminés, suivie d'une détermination des marges d'allocation pour les ressources extrapolées associées à chaque type de trafic en fonction de données d'évolution de trafic stockées, propres à chaque station de trafic, et des taux d'occupation déterminés de l'ensemble des stations de trafic, suivie enfin de l'ajout des marges d'allocation déterminées aux ressources extrapolées. Dans ce cas, les données d'évolution de trafic sont préférentiellement représentatives de l'écart entre les ressources extrapolées précédemment déterminées, hors marge, et les ressources effectivement utilisées, obtenues à partir des taux d'occupation venant d'être déterminés. On peut ensuite, par exemple, générer à partir des données d'évolution de trafic des histogrammes représentatifs de la variation temporelle de chaque type de trafic pour chaque liaison satellite, puis déterminer à partir de chaque histogramme un taux de blocage pour chaque liaison radio, fonction de la marge d'allocation attribuée, puis déterminer pour chaque liaison radio un taux de blocage pour chaque taux d'occupation déterminé pour chaque type de trafic et pour chaque valeur de marge à partir d'une valeur nulle, de manière à déterminer le nombre de canaux de marge à attribuer à chaque liaison radio, compte tenu de ses taux d'occupation déterminés, et enfin effectuer un tri par taux de blocage croissant, toutes liaisons confondues, de manière à garantir le taux de blocage le plus faible pour chacune des liaisons radio compte tenu de la marge d'allocation totale disponible,
- une répartition primaire pouvant être établie périodiquement. Dans ce cas, les répartitions secondaires sont préférentiellement établies périodiquement consécutivement à l'établissement d'une répartition primaire,
- une répartition primaire pouvant être établie pour le trafic à transmettre (ou « forward traffic ») et pour le trafic à recevoir (ou « return traffic »).

L'invention ne se limite pas aux modes de réalisation de hub, de centre de gestion et de station de trafic décrits ci-avant, seulement à titre d'exemple, mais elle englobe toutes les variantes que pourra envisager l'homme de l'art dans le cadre des revendications ci-après.

Ainsi, on a décrit l'invention dans une application à la transmission de type TDMA. Mais l'invention s'applique également à la transmission de type SCPC, FDMA, CDMA, voire tout autre type de transmission reposant sur un partage dynamique des ressources de transmission.

Par ailleurs, l'invention s'applique aux équipements de compression/décompression opérant sur des signaux avant compression, portés par des trames ou des paquets, ou par des circuits.

## Revendications

1. Procédé de gestion de ressources dans un réseau de communications de type point ou multipoint à multipoint dans lequel ont été établies des liaisons radio (Li), partageant des ressources, entre des stations de trafic distantes (STi) et un centre de gestion (CG), consistant i) à déterminer pour chaque station de trafic distante (STi) des premières données d'information représentatives de taux d'occupation, par type de trafic, des ressources précédemment allouées à sa liaison radio (Li), ii) à déterminer, au moins en fonction desdits taux d'occupation par type de trafic, une répartition primaire desdites ressources entre les différentes liaisons radio (Li), incluant des marges d'allocation, et **caractérisé en ce qu'**il consiste iii) à déterminer pour chaque station de trafic distante (STi) une répartition secondaire entre différents types de trafic des ressources allouées à sa liaison radio (Li) par la répartition primaire, compte tenu au moins de ses taux d'occupation par type de trafic.

2. Système de gestion de ressources, comprenant un centre de gestion de trafic (CG) pour un réseau de communications de type point ou multipoint à multipoint comprenant des stations de trafic distantes (STi) couplées audit centre de gestion par des liaisons radio (Li) partageant des ressources,
le centre de gestion comprenant des moyens de gestion (13) propres à déterminer une répartition primaire desdites ressources, incluant des marges d'allocation, entre les différentes liaisons radio Li qu'ils gèrent et qui ont été précédemment instaurées entre stations de trafic distantes (STi), au moins en fonction dé premières données d'information représentatives de taux d'occupation, par type de trafic, des ressources précédemment allouées auxdites liaisons radio
et **caractérisé en ce que:**
- chaque station de trafic distante (STi) comprend des moyens de répartition secondaire (18) agencés pour déterminer, au moins en fonction de ses taux d'occupation par type de trafic, une répartition secondaire, entre ses différents types de trafic, des ressources allouées à sa liaison radio (Li) par le centre de gestion de trafic (CG)

3. Système selon la revendication 2, **caractérisé en ce que** le centre de gestion comprend des moyens de compression et de décompression (6) couplés auxdits moyens dé gestion (13) et propres à compresser des trames destinées auxdites stations de trafic distantes (STi) via lesdites liaisons radio (Li) et a décompresser des trames compressées provenant desdites stations de trafic distantes, via lesdites liaisons radio (Li).

4. Système selon l'une des revendications 2 et 3, **caractérisé en ce que** lesdits moyens de gestion (13) sont agencés pour déterminer ladite répartition primaire à partir desdites premières données d'information et de secondes données d'information représentatives des besoins d'allocation desdites stations de trafic (STi).

5. Système selon la revendication 3, ou la revendication 3 combinée à la revendication 4, **caractérisé en ce que** lesdits moyens de compression et de décompression (6) sont agencés pour déterminer lesdites premières données d'information à partir des informations contenues dans lesdites trames compressées reçues.

6. Système selon la revendication. 5, **Caractérisé en ce que** lesdites premières données d'information sont contenues dans lesdites trames compressées reçues.

7. Système selon la revendication 4, ou la revendication 5 combinée à la revendication 4, ou la revendication 6, **caractérisé en ce que** lesdits moyens de compression et de décompression (6) sont agencés pour extraire des trames transmises par lesdites stations de trafic distantes (STi) lesdites secondes données d'information, fonction du trafic qu'elles doivent transmettre via la liaison radio correspondante (Li).

8. Système selon la revendication 7, **caractérisé en ce que** lesdites secondes données d'information sont intégrées dans des trames dédiées via une voie de signalisation dédiée de la liaison radio correspondante (Li).

9. Système selon la revendication 7, **caractérisé en ce que** lesdites secondes données d'information sont intégrées dans les trames de trafic transmises.

10. Système selon l'une des revendications 4, 7, 8 ou 9, **caractérisé en ce que** lesdites secondes données sont agencées sous la forme d'un indicateur binaire représentatif d'un état de saturation.

11. Système selon l'une des revendications 3 à 10, **caractérisé en ce que** lesdits types de trafic sont choisis dans un groupe comprenant au moins le trafic de signalisation de compression, le trafic de signalisation, réseau, le trafic voix et le trafic de données.

12. Système selon l'une des revendications 2 à 11, **caractérisé en ce que** lesdits moyens de gestion (13) comprennent des moyens de répartition secondaire (18) agencés pour déterminer ladite répartition secondaire en fonction de niveaux de priorité définis entre lesdits types de trafic.

13. Système selon la combinaison des revendications 11 et 12, **caractérisé en ce que** le trafic de signalisation de compression présente le niveau de priorité le plus élevé, puisse trafic de signalisation réseau présente le niveau de priorité inférieur, puis le trafic voix présente le niveau de priorité inférieur, et le trafic de données présente le niveau de priorité le plus bas.

14. Système selon l'une des revendications 12 et 13, **caractérisé en ce que** lesdits moyens de répartition secondaire (18) sont agencés, en cas de saturation des ressources de leur liaison radio (Li) allouées au trafic voix, pour attribuer audit trafic voix les ressources précédemment allouées au trafic de données, moyens de compression et décompression (6) stockant alors dans une première mémoire (20), de type tampon, les données du trafic de données de leur liaison radio (Li) pendant la durée de la saturation, et supprimant ces données stockées lorsque ladite durée dépasse un seuil choisie.

15. Système selon la revendication 14, **caractérisé en ce qu'**en cas de persistance de la saturation du trafic voix, lesdits moyens de répartition secondaire (18) sont agences pour autoriser le maintien des communications en cours, et pour interdire l'initialisation de nouvelles communications.

16. Système selon la revendication 15, **caractérisé en ce qu'**en cas de persistance de la saturation du trafic voix pour des communications en cours, lesdits moyens de répartition secondaire (18) sont agencés pour attribuer momentanément audit trafic voix d'une liaison radio (Li) des ressources réservées au trafic dit « en mode silence » de cette liaison, et pour interdire l'initialisation de nouvelles communications.

17. Système selon l'une des revendications 2 à 16, **caractérisé en ce que** lesdits moyens de gestion (13) sont agencés pour déterminer ladite répartition primaire à partir d'un modèle d'évolution de trafic de type statique.

18. Système selon l'une des revendications 2 à 17, **caractérisé en ce que** lesdits moyens de gestion (13) comprennent des moyens de répartition primaire. (15) agencés i) pour stocker les taux d'occupation par type ce trafic déterminés pour chaque station de trafic distante (STi), ii) pour déterminer par extrapolation pour chaque station de trafic distante (STi) les ressources dont elle a besoin pour chacun de ses types de trafic en fonction de ses taux d'occupation par type de trafic déterminés, iii) pour déterminer des marges d'allocation pour les ressources extrapolées associées à chaque type de trafic en fonction de données d'évolution de trafic stockées propres à chaque station de trafic distante (STi) et des taux d'occupation déterminés de l'ensemble des stations de trafic distante (STi), et iv) pour ajouter lesdites marges d'allocation déterminées auxdites ressources extrapolées; de manière à fournir ladite répartition primaire.

19. Système selon la revendication 18, **caractérisé en ce que** lesdits moyens de répartition primaire (15) sont agencés pour déterminer des données d'évolution de trafic représentatives de l'écart entre les ressources extrapolées précédemment déterminées, hors marge, et les ressources effectivement utilisées, obtenues à partir des taux d'occupation venant d'être déterminés.

20. Système selon la revendication 19, **caractérisé en ce que** lesdits moyens de répartition primaire (15) sont agencés i) pour générer à partir desdites données d'évolution de trafic des histogrammes représentatifs de la variation temporelle de chaque type de trafic pour chaque liaison radio (Li), ii) pour déterminer à partir de chaque histogramme un taux de blocage pour chaque liaison radio (Li), fonction de la marge d'allocation attribuée; iii) pour déterminer pour chaque liaison radio (Li) un taux de blocage pour chaque taux d'occupation déterminé pour chaque type de trafic et pour chaque valeur de marge à partir d'une valeur nulle, de manière à déterminer le nombre de canaux de marge à attribuer à chaque liaison radio (Li), compte tenu de ses taux d'occupation déterminés (en cours), et iv) pour effectuer un tri par taux de blocage croissant, toutes liaisons radio confondues, de manière à garantir le taux de blocage le plus faible pour chacune des liaisons radio (Li) compte tenu de la marge d'allocation totale disponible.

21. Système selon, l'une des revendications 2 à 20, **caractérisé en ce que** lesdits moyens de gestion (13) sont agencés pour établir périodiquement ladite répartition primaire, et **en ce que** lesdits moyens de répartition secondaire. (18) sont agencés pour établir périodiquement lesdites répartitions secondaires, consécutivement à l'établissement d'une répartition primaire.

22. Système selon l'une des revendications 2 à 21, **caractérisé en ce que** lesdits, moyens de gestion (13) sont agencés pour établir ladite répartition primaire pour le trafic à transmettre et pour le trafic à recevoir.

23. Utilisation du procédé et du système selon l'une des revendications précédentes dans les réseaux de communication de type point ou multipoint, à multipoint choisis dans un groupe comprenant les réseaux de communications par satellite et les réseaux de communications terrestres radio avec ou sans extension satellitaire.

24. Utilisation selon la revendication 23, **caractérisée en ce que** lesdits réseaux de communications terrestre radio avec extension satellitaire sont des réseaux cellulaires opérant en mode TDMA ou CDMA.

## Claims

1. A method of managing resources in a point-to-multipoint or multipoint-to-multipoint communications network in which radio links (Li) sharing resources have been set up between remote traffic stations (STi) and a management center (CG), consisting in i) determining for each remote traffic station (STi) first information data representing rates of occupancy per traffic type of the resources previously assigned to its radio link (Li), ii) determining at least as a function of said rates of occupancy per traffic type a primary distribution of said resources between the radio links (Li), including assignment margins, and **characterized in that** it consists in iii) determining for each remote traffic station (STi) a secondary distribution between traffic types of the resources assigned to its radio link (Li) as a result of the primary distribution, taking account of its rates of occupancy per traffic type.

2. A resource management system, comprising a traffic management center (CG) for a point-to-multipoint or multipoint-to-multipoint communications network comprising remote traffic stations (STi) connected to said management center by radio links (Li) sharing resources,
the management center comprising management means (13) for determining a primary distribution of said resources, including assignment margins, between the radio links (Li) that they manage and that have previously been set up between remote traffic stations (STi) at least as a function of first information data representing rates of occupancy per traffic type of resources previously assigned to said radio links (Li)
and **characterized in that**:
each remote traffic station (STi) includes secondary distribution means (18) that determine, at least as a function of its rates of occupancy per traffic type, a secondary distribution between traffic types of resources assigned to its radio link (Li) by the traffic management centre (CG).

3. A system according to claim 2, **characterized in that** the management center comprises compression and decompression means (6) connected to said management means (13) for compressing frames to be sent to said remote traffic stations (STi) via said radio links (Li) and decompressing compressed frames coming from said remote traffic stations via said radio links (Li).

4. A system according to claim 2 or claim 3, **characterized in that** said management means (13) determine said primary distribution from said first information data and from second information data representing the assignment requirements of said traffic stations (STi).

5. A system according to claim 3, or claim 3 in combination with claim 4, **characterized in that** said compression and decompression means (6) determine said first information data from information contained in said received compressed frames.

6. A system according to claim 5, **characterized in that** said first information data is contained directly in said received compressed frames.

7. A system according to claim 4, or claim 5 in combination with claim 4, or claim 6, **characterized in that** said compression and decompression means (6) extract said second information data from frames sent by said remote traffic stations (STi), a function of the traffic that they have to send via the corresponding radio link (Li).

8. A system according to claim 7, **characterized in that** said second information data is integrated into dedicated frames and sent via a dedicated signaling channel of the corresponding radio link (Li).

9. A system according to claim 7, **characterized in that** said second information data is integrated into the traffic frames sent.

10. A system according to any one of claims 4, 7, 8, or 9, **characterized in that** said second data takes the form of a binary indicator representing a state of saturation.

11. A system according to any one of claims 3 to 10, **characterized in that** said traffic types are selected from a group including compression signaling traffic, network signaling traffic, voice traffic and data traffic.

12. A system according to any one of claims 2 to 11, **characterized in that** said management means (13) comprise secondary distribution means (18) that determine said secondary distribution as a function of defined levels of relative priority of said traffic types.

13. A system according to claim 11 in combination with claim 12, **characterized in that** compression signaling traffic has the highest priority level, network signaling traffic has the next lower priority level, voice traffic has the next lower priority level and data traffic has the lowest priority level.

14. A system according to claim 12 or claim 13, **characterized in that**, in the event of saturation of resources on their radio link (Li) assigned to voice traffic, said secondary distribution means (18) assign to said voice traffic resources previously assigned to data traffic, said compression and decompression means (6) then storing the data of the data traffic of their radio link (Li) in a first buffer (20) during the period of saturation and deleting the stored data if said period exceeds a selected threshold.

15. A system according to claim 14, **characterized in that**, in the event of persistence of voice traffic saturation, said secondary distribution means (18) authorize calls in progress to continue and prohibit the initialization of new calls.

16. A system according to claim 15, **characterized in that**, in the event of persistence of voice traffic saturation for calls in progress, said secondary distribution means (18) assign temporarily to said voice traffic of a radio link (Li) resources reserved for "silence mode" traffic of that link and prohibit the initialization of new calls.

17. A system according to any one of claims 2 to 16, **characterized in that** said management means (13) determine said primary distribution from a static traffic evolution model.

18. A system according to any one of claims 2 to 17, **characterized in that** said management means (13) comprise primary distribution means (15) that i) store the rates of occupancy per traffic type determined for each remote traffic station (STi), ii) determine by extrapolation for each remote traffic station (STi) the resources it requires for each of its traffic types as a function of its determined rates of occupancy per traffic type, iii) determine assignment margins for the extrapolated resources associated with each traffic type as a function of stored traffic evolution data specific to each remote traffic station (STi) and the determined rates of occupancy of all the remote traffic stations (STi), and iv) add said determined assignment margins to said extrapolated resources to provide said primary distribution.

19. A system according to claim 18, **characterized in that** said primary distribution means (15) determine traffic evolution data representing the difference between the extrapolated resources previously determined, excluding the margin, and the resources actually being used, obtained from the rates of occupancy that have just been determined.

20. A system according to claim 19, **characterized in that** said primary distribution means (15) i) generate from said traffic evolution data histograms representing the temporal variation of each traffic type for each radio link (Li), ii) determine from each histogram a blocking rate for each radio link (Li), a function of the assignment margin allocated, iii) determine for each radio link (Li) a blocking rate for each rate of occupancy determined for each type of traffic and for each margin value starting from a null value, in order to determine the number of margin channels to be assigned to each radio link (Li) taking account of its (current) determined rates of occupancy, and iv) carry out a sort by increasing blocking level, with all radio links lumped together, to guarantee the lowest blocking rate for each of the radio links (Li) taking account of the total available assignment margin.

21. A system according to any one of claims 2 to 20, **characterized in that** said management means (13) establish said primary distribution periodically and said secondary distribution means (18) establish said secondary distribution periodically after a primary distribution has been established.

22. A system according to any one of claims 2 to 21, **characterized in that** said management means (13) establish said primary distribution for traffic to be sent and for traffic to be received.

23. Use of the method and of the system according to any of the preceding claims in point-to-multipoint or multipoint-to-multipoint communications networks selected from a group including satellite communications networks and terrestrial radio communications networks with or without satellite extension.

24. Use according to claim 23, **characterized in that** said terrestrial radio communications networks with satellite extension are TDMA or CDMA cellular networks.

## Patentansprüche

1. Verfahren zur Verwaltung von Betriebsmitteln in einem Kommunikationsnetz vom Typ Punkt oder Mehrpunkt zu Mehrpunkt, in welchem die Funkverbindungen (Li), die die Betriebsmittel teilen, zwischen Fernstationen (STi) und einem Verwaltungszentrum (CG) aufgebaut worden sind, welches darin besteht, i) für jede Fernstation (STi) erste für den Belegungsgrad, je nach Verkehrsart, der zuvor ihrer Funkverbindung (Li) zugeteilten Betriebsmittel typische Informationsdaten zu bestimmen, ii) zumindest gemäß den besagten Belegungsgraden je Verkehrsart, eine Primärverteilung der besagten Betriebsmittel zwischen den verschiedenen Funkverbindungen (Li), einschließlich von Zuteilungsreserven, zu bestimmen, und **dadurch gekennzeichnet, dass** es darin besteht, iii) für jede Fernstation (STi) eine Sekundärverteilung zwischen verschiedenen Verkehrsarten der ihrer Funkverbindung (Li) per Primärverteilung zugeteilten Betriebsmittel zu bestimmen, unter Berücksichtigung zumindest der Belegungsgrade pro Verkehrsart.

2. System zur Verwaltung von Betriebsmitteln, welches ein Verkehrsverwaltungszentrum (CG) für ein Kommunikationsnetz vom Typ Punkt oder Mehrpunkt zu Mehrpunkt und Fernstationen (STi), die an das besagte Verwaltungszentrum über Funkverbindungen (Li), die die Betriebsmittel teilen, gekoppelt sind, umfasst,
wobei das Verwaltungszentrum Verwaltungsmittel (13) umfasst, die fähig sind, eine Primärverteilung der besagten Mittel, einschließlich von Zuteilungsreserven, zwischen den verschiedenen Funkverbindungen (Li), die sie verwalten und die zuvor zwischen Fernstationen (STi) eingerichtet worden sind, zu bestimmen, zumindest gemäß den für die Belegungsgrade typischen ersten Informationsdaten, pro Verkehrsart, der den besagten Funkverbindungen (Li) zuvor zugeteilten Betriebsmittel,
und **dadurch gekennzeichnet, dass**:
- jede Fernstation (STi) Mittel zur Sekundärverteilung (18) umfasst, welche derart angelegt sind, dass sie zumindest gemäß ihren Belegungsgraden pro Verkehrsart eine Sekundärverteilung der ihrer Funkverbindung (Li) vom Verkehrsverwaltungszentrum (CG) zugeteilten Betriebsmittel zwischen ihren verschiedenen Verkehrsarten zu bestimmen.

3. System nach Anspruch 2, **dadurch gekennzeichnet, dass** das Verwaltungszentrum Komprimierungs- und Entkomprimierungsmittel (6) umfasst, welche an die besagten Verwaltungsmittel (13) gekoppelt und fähig sind, für die besagten Fernstationen (STi) über die besagten Funkverbindungen (Li) bestimmte Rahmen zu komprimieren und über die besagten Funkverbindungen (Li) ankommende komprimierte Rahmen zu entkomprimieren.

4. System nach einem der Ansprüche 2 und 3, **dadurch gekennzeichnet, dass** die besagten Verwaltungsmittel (13) derart angelegt sind, dass sie die besagte Primärverteilung ausgehend von den besagten ersten Informationsdaten und von zweiten Informationsdaten, welche für die Zuteilungsbedarfe der besagten Fernstationen (STi) typisch sind, bestimmen.

5. System nach Anspruch 3, oder nach Anspruch 3 kombiniert mit Anspruch 4, **dadurch gekennzeichnet, dass** die besagten Komprimierungs- und Entkomprimierungsmittel (6) derart angelegt sind, dass sie die besagten ersten Informationsdaten ausgehend von in den besagten empfangenen komprimierten Rahmen enthaltenen Informationen bestimmen.

6. System nach Anspruch 5, **dadurch gekennzeichnet, dass** die besagten ersten Informationsdaten in den besagten empfangenen komprimierten Rahmen enthalten sind.

7. System nach Anspruch 4, oder nach Anspruch 5 kombiniert mit Anspruch 4, oder nach Anspruch 6, **dadurch gekennzeichnet, dass** die besagten Komprimierungs- und Entkomprimierungsmittel (6) derart angelegt sind, dass sie, je nach Verkehr, die besagten zweiten Informationen, die sie über die entsprechende Funkverbindung (Li) übertragen sollen, aus den von den besagten Fernstationen übertragenen Rahmen extrahieren.

8. System nach Anspruch 7, **dadurch gekennzeichnet, dass** die besagten zweiten Informationsdaten über einen dedizierten Signalisierungsweg der entsprechenden Funkverbindung (Li) in dedizierte Rahmen integriert sind.

9. System nach Anspruch 7, **dadurch gekennzeichnet, dass** die besagten zweiten Informationsdaten in übertragenen Verkehrsrahmen integriert sind.

10. System nach einem der Ansprüche 4, 7, 8 oder 9, **dadurch gekennzeichnet, dass** die besagten zweiten Daten in Form einer Bitanzeige, welche für einen Sättigungszustand typisch ist, angelegt sind.

11. System nach einem der Ansprüche 3 bis 10, **dadurch gekennzeichnet, dass** die besagten Verkehrsarten in einer Gruppe gewählt werden, welche mindestens den Komprimierungssignalisierungsverkehr, den Netzsignalisierungsverkehr, den Sprachverkehr und den Datenverkehr umfasst.

12. System nach einem der Ansprüche 2 bis 11, **dadurch gekennzeichnet, dass** die besagten Verwaltungsmittel (13) Sekundärverteilungsmittel (18) umfassen, welche derart angelegt sind, dass sie die besagte Sekundärverteilung gemäß den zwischen den besagten Verkehrsarten definierten Prioritätsebenen bestimmen.

13. System nach einer Kombination der Ansprüche 11 und 12, **dadurch gekennzeichnet, dass** der Komprimierungssignalisierungsverkehr die höchste Prioritätsebene aufweist, der Netzsignalisierungsverkehr die nächst niedrigere Prioritätsebene aufweist, der Sprachverkehr die anschließend nächst niedrigere Prioritätsebene aufweist, und der Datenverkehr die niedrigste Prioritätseben aufweist.

14. System nach einem der Ansprüche 12 und 13, **dadurch gekennzeichnet, dass** die besagten Sekundärverteilungsmittel (18) derart angelegt sind, dass sie im Fall einer Sättigung der dem Sprachverkehr zugeteilten Betriebsmittel ihrer Funkverbindung (Li) dem besagten Sprachverkehr die zuvor dem Datenverkehr zugeteilten Betriebsmittel zuteilen, wobei die besagten Komprimierungs- und Entkomprimierungsmittel (6) die Daten des Datenverkehrs der Funkverbindung (Li) während der Dauer der Sättigung in einem ersten Speicher (20), vom Typ Zwischenspeicher, speichert und diese gespeicherten Daten löscht, wenn die besagte Dauer einen gewählten Grenzwert überschreitet.

15. System nach Anspruch 14, **dadurch gekennzeichnet, dass** die besagten Sekundärverteilungsmittel (18) im Fall des Fortbestehens der Sättigung des Sprachverkehrs so angelegt sind, dass sie das Aufrechterhalten der bestehenden Verbindungen erlauben und die Initialisierung von neuen Verbindungen verweigern.

16. System nach Anspruch 15, **dadurch gekennzeichnet, dass** die besagten Sekundärverteilungsmittel (18) im Fall des Fortbestehens der Sättigung des Sprachverkehrs für bestehende Verbindungen so angelegt sind, dass sie dem besagten Sprachverkehr einer Funkverbindung (Li) vorübergehend Betriebsmittel zuteilen, welche für den sogenannten "Funkstillemodus"-Verkehr reserviert sind, und die Initialisierung von neuen Verbindungen verweigern.

17. System nach einem der Ansprüche 2 bis 16, **dadurch gekennzeichnet, dass** die besagten Verwaltungsmittel (13) derart angeordnet sind, dass sie die besagte Primärverteilung ausgehend von einem Entwicklungsmodell des Verkehrs von statischem Typ bestimmen.

18. System nach einem der Ansprüche 2 bis 17, **dadurch gekennzeichnet, dass** die besagten Verwaltungsmittel (13) Primärverteilungsmittel (15) umfassen, welche derart angelegt sind, dass sie i) die für jede Fernstation (STi) bestimmten Belegungsgrade pro Verkehrsart speichern, ii) durch Extrapolieren für jede Fernstation (STi) die Betriebsmittel, die sie für einen jeden der Verkehrsarten gemäß den festgelegten Belegungsgraden pro Verkehrsart benötigt, bestimmen, iii) Zuteilungsreserven für die jeder Verkehrsart gemäß den jeder Fernstation eigenen gespeicherten Daten über die Entwicklung des Verkehrs zugeordneten extrapolierten Betriebsmittel bestimmen, und iv) die besagten festgelegten Zuteilungsreserven zu den besagten extrapolierten Betriebsmitteln hinzuzufügen, so dass die besagte Primärverteilung bereitgestellt wird.

19. System nach Anspruch 18, **dadurch gekennzeichnet, dass** die besagten Primärverteilungsmittel (15) derart angelegt sind, dass sie Daten über die Entwicklung des Verkehrs, welche für den Unterschied zwischen den zuvor bestimmten extrapolierten Betriebsmitteln, ohne Reserve, und den tatsächlich benutzten Betriebsmitteln typisch sind, welche ausgehend von den soeben festgelegten Belegungsgraden ermittelt wurden, bestimmen.

20. System nach Anspruch 19, **dadurch gekennzeichnet, dass** die besagten Primärverteilungsmittel (15) so angelegt sind, i) dass sie ausgehend von den besagten Daten über die Entwicklung des Verkehrs Histogramme zu erzeugen, welche für die zeitliche Variation jeder Verkehrsart für jede Funkverbindung (Li) typisch sind, ii) dass sie ausgehend von jedem Histogramm eine Blockierungsrate für jede Funkverbindung gemäß der zugewiesenen Zuteilungsreserve bestimmen, iii) dass sie für jede Funkverbindung (Li) eine Blockierungsrate für jeden für jede Verkehrsart und für jeden Reservewert, ausgehend von einem Nullwert, festgelegten Belegungsgrad bestimmen, um die Zahl der jeder Funkverbindung (Li) zuzuteilenden Reservekanäle unter Berücksichtigung deren festgelegten (bestehenden) Belegungsgrade zu bestimmen, und iv) dass sie für alle Funkverbindungen eine Sortierung je aufsteigendem Blockierungsgrad vornehmen, um für eine jede Funkverbindung (Li) unter Berücksichtigung der insgesamt verfügbaren Zuteilungsreserve die niedrigste Blockierungsrate zu garantieren.

21. System nach einem der Ansprüche 2 bis 20, **dadurch gekennzeichnet, dass** die besagten Verwaltungsmittel (13) derart angelegt sind, dass sie periodisch die Primärverteilung vornehmen, und dass die besagten Mittel für die Sekundärverteilung (18) so angelegt sind, dass sie periodisch die Sekundärverteilung im Anschluss an eine Primärverteilung vornehmen.

22. System nach einem der Ansprüche 2 bis 21, **dadurch gekennzeichnet, dass** die besagten Verwaltungsmittel (13) derart angelegt sind, dass sie die besagte Primärverteilung für den zu übertragenden Verkehr sowie für den zu empfangenden Verkehr vornehmen.

23. Anwendung des Verfahrens und des Systems nach einem der vorstehenden Ansprüche in Kommunikationsnetzen vom Typ Punkt oder Mehrpunkt zu Merkpunkt, welche in einer Gruppe gewählt werden, die die Kommunikationsnetze über Satellit und die terrestrischen Funkkommunikationsnetze mit oder ohne Ausweitung auf Satelliten umfassen.

24. Anwendung nach Anspruch 23, **dadurch gekennzeichnet, dass** die besagten terrestrischen Funkkommunikationsnetze im TDMA- oder CDMA-Modus arbeitende Zellularnetze sind.
